# EUROPÄISCHE PATENTSCHRIFT

(11) **EP 2 011 566 B1**
(45) Veröffentlichungstag und Bekanntmachung des Hinweises auf die Patenterteilung: **15.12.2010**
(21) Anmeldenummer: 07013238.6
(22) Anmeldetag: 06.07.2007
(51) Int. Cl.: B01J 19/02, C22C 38/02, F28F 21/08, B22D 25/06

(54) **Apparatur zur Reinigung von Abfallschwefelsäure**
Apparatus for cleaning waste sulphuric acid
Appareil destiné au nettoyage d'acide sulfurique de déchets

(43) Veröffentlichungstag der Anmeldung: 07.01.2009
(73) Patentinhaber: PLINKE GmbH, 61348 Bad Homburg (DE)
(72) Erfinder: Henke, Lüder, 60529 Frankfurt (DE); Pataky, Peter, 61350 Bad Homburg (DE); Hetzel, Joachim, 61440 Oberursel (DE); Winterbauer, Hansjürgen, 61191 Rosbach (DE)
(74) Vertreter: Knoblauch, Andreas

(56) Entgegenhaltungen:
- EP-A- 0 117 986
- DE-A1- 3 050 562
- DE-A1- 4 221 874
- DE-A1- 19 807 632
- CHANDLEY, DIXON G.: "use of vacuum for gravity casting of metals" MAT. RES. INNOVAT., 1999, Seiten 14-23, XP002462832 springer / heidelberg ISSN: 1432-8917 [gefunden am 2006-12-17]

## Beschreibung

Die Erfindung betrifft eine Apparatur zur Reinigung von Abfallschwefelsäure, bei der durch Behandlung bei hoher Temperatur und Zugabe von Oxidationsmittel organische Verunreinigungen in der Schwefelsäure zerstört werden und die Säure dadurch gereinigt wird.

Bereits aus der DE 24 04 613 B2 ist ein Verfahren bekannt zur Reinigung eines zur Nitrierung aromatischer Verbindungen verwendeten Stroms verbrauchter Säure, die neben organischen Verunreinigungen etwa 60 bis 85 % Schwefelsäure enthält, bei dem durch Abstreifen des Säurestroms zur Entfernung eines wesentlichen Anteils an flüchtigen organischen Verbindungen und anschließendes Kontaktieren des dabei erhaltenen, mindestens 50 ppm nichtflüchtige, aus Nitrokresolen und anderen Nitrophenolverbindungen bestehenden organischen Verunreinigungen enthaltenden Säurestroms mit einem Oxidationsmittel, dadurch gekennzeichnet, dass man den abgestreiften Säurestrom mit einem aus Ozon, Wasserstoffperoxyd, Chloraten, Peroxodisulfaten oder Gemischen derselben bestehenden Oxidationsmittel in solcher Weise in Kontakt bringt, dass pro Äquivalent nichtflüchtige organische Verbindung mindestens 1 stöchiometrisches Äquivalent Oxidationsmittel in Anteilen von etwa 1/3 Äquivalent oder weniger im Verlauf von 1 Minute bis etwa 60 Minuten bei einer Temperatur von 130 bis 230 °C zugegeben wird, und einen gereinigten Säurestrom abzieht.

Aus der EP 0 052 548 B1 ist ein Verfahren bekannt zur Reinigung von Rückstandsschwefelsäure aus der Herstellung von Alkoholen durch Hydratation der entsprechenden ethylenischen Kohlenwasserstoffe, bei dem man kontinuierlich und gleichzeitig in einen Reaktor Schwefelsäure, die zuvor auf mindestens 70 % konzentriert wurde, und Salpetersäure einer Konzentration von mindestens 60 % HNO₃ einsetzt, wobei die Salpetersäure bei einer Temperatur von mindestens 150 °C eingesetzt wird, dadurch gekennzeichnet, dass die Salpetersäure in einer Menge von 0,5 bis 1 Molekül Salpetersäure pro Atom Kohlenstoff, der Form von organischem Material in der zu reinigenden Schwefelsäure gelöst ist, zugegeben wird und dass die so erhaltene Flüssigkeit kontinuierlich in einen zweiten Reaktor umgefüllt wird, der bei einer Temperatur über 150 °C gehalten und nicht mit Salpetersäure beschickt wird.

Aus der EP 01 17 986 A2 und der EP 01 17 986 B1 ist ein Umlaufverfahren bekannt zum Konzentrieren und Reinigen von organische Verunreinigungen enthaltender Schwefelsäure, bei welchem die aufzubereitende Schwefelsäure unter Wärmezufuhr kontinuierlich einem Verdampfungsprozess zugeführt und unter kontinuierlicher Abtrennung der Brüden auf höhere Konzentration gebracht wird, dadurch gekennzeichnet, dass die aufzubereitende Schwefelsäure in dem notwendigen Aufheizweg entsprechendem, eine Reaktionsstrecke bildendem Abstand von der Abtrennstelle der Brüden und Gase von der Flüssigphase einem Teil der den Verdampfungsprozess konzentriert verlassenden Säure zugeführt und mit dieser der genannten Abtrennstelle zugeleitet wird, wobei der aufzubereitenden Säure vor deren Einführung in die Flüssigphase der im Verdampfungsprozess befindlichen Säure im Gleichstrom ein Oxidationsmittel zugegeben wird. Die eingesetzten Materialien speziell für den Heizer sind hier nicht näher beschrieben.

Aus der DE 198 07 632 A1 ist eine Vorrichtung bekannt zum Konzentrieren von Schwefelsäure auf 95 bis 98 % H₂SO₄-Gehalt und gegebenenfalls zum Reinigen der Schwefelsäure bei einer Temperatur von 270 bis 340 °C, bestehend wenigstens aus einem Naturumlaufverdampfersystem gebildet aus einem zweiteiligen Brüdendom, einem Rohrbündelwärmetauscher, Kreislaufleitung und Destillationskolonne, dadurch gekennzeichnet, dass die flüssige 270 bis 340 °C heiße Schwefelsäure führenden Apparateteile Brüdendomunterteil, Wärmetauscher und

Kreislaufleitung aus einer siliziumhaltigen austenitisch-ferritischen Eisenlegierung mit entsprechend beschriebener Zusammensetzung und das Oberteil des Brüdendoms und die Destillationskolonne aus emailliertem Stahl bestehen.

Aus BARTHOLOME. E. [u.a. Hrsg]: Ullmanns Encyklopädie der Technischen Chemie, 4. neubearbeitete und erweiterte Auflage, Weinheim [u.a.]: Verlag Chemie, 1982, Band A 21 S. 157-159 ist die Beständigkeit von Siliziumguss mit 14-18 % Si-Gehalt gegen konzentrierte Schwefelsäure bekannt, jedoch wird auch die geringe Beständigkeit des Materials gegen thermischen und mechanischen Schock erwähnt.

In DE 30 50 562 A1, DE 30 15 957 A1, DE 972 412 B1 und

GB 11 75 055 A wurde bereits die Verwendung von Siliziumguss, d. h. einer Eisenlegierung mit einem Siliziumgehalt von 14-18%, für einen Wärmeaustauscher für heiße Schwefelsäure vorgeschlagen. In DE 33 20 527 C2 wird allerdings darauf hingewiesen, dass Materialien mit 14 bis 18 % Si aufgrund der Härte und Sprödigkeit des Materials als Wärmeaustauscher nicht eingesetzt werden.

In EP 0 615 950 A1, EP 0 378 998 A1, DE 197 19 394 C1, DE 42 13 325 A1 und DE 33 20 527 C2 wird die Beständigkeit von siliziumhaltigen Legierungen mit Siliziumgehalten zwischen 4 bis max. 9 % Si gegen Schwefelsäure und der Einsatz als Wärmeaustauscher beschrieben. In den Schriften wird aber darauf hingewiesen, dass Materialien mit 14 bis 18 % Si aufgrund der Härte und Sprödigkeit des Materials als Wärmeaustauscher nicht eingesetzt werden.

Auch in US 2002/0009382 A1 wird die Empfindlichkeit von Material mit hohen Si-Gehalten gegen thermischen Schock beschrieben und es wird darauf hingewiesen, dass dieses Material nicht in bearbeitbarer Form zur Verfügung steht.

In der US 1 861 568 wird ebenfalls darauf hingewiesen, dass das Material mit 8-20 % Si nicht in bearbeitbarer Form zur Verfügung steht. Auch wird die Zerbrechlichkeit des Materials erwähnt. Erst durch Zusatz von Antimon wird hier die Bearbeitung möglich.

In DE 30 15 957 A1 wird zwar die Möglichkeit des Einsatzes von siliziumhaltigem Stahlguss als Wärmeaustauscher beschrieben, es wird aber kein Si-Gehalt und keine Zusammensetzung angegeben.

In GB 429 267 wird die Möglichkeit des Einsatzes von siliziumhaltigem Stahlguss als Wärmeaustauscher beschrieben. Hier wird aber nur der Einsatz als Kondensator und Kühler beschrieben, bei maximal 140 bis 150 °C. Der Einsatz als Heizer bei höheren Temperaturen wird nicht angegeben. Es werden keine Si-Gehalte und keine Zusammensetzung angegeben.

In GB 1 175 055 wird zwar die Möglichkeit des Einsatzes von siliziumhaltigem Stahlguss als Wärmeaustauscher zum Beheizen von Schwefelsäure beschrieben, es wird aber kein Si-Gehalt und keine Zusammensetzung angegeben.

In US 1 861 568 wird auch die Möglichkeit des Einsatzes von siliziumhaltigem Stahlguss als Wärmeaustauscher beschrieben. Hier wird aber ebenfalls nur der Einsatz als Kondensator und Kühler beschrieben, und zwar für SO₃ und H₂O Dämpfe. Hier werden ebenfalls keine Si-Gehalte und keine Zusammensetzung angegeben.

Stand der Technik ist es somit, dass eine Vielzahl von organisch verunreinigten Schwefelsäuren durch Zugabe eines Oxidationsmittels und/oder Behandlung bei hoher Temperatur von den organischen Verunreinigungen befreit werden können. Gemäß dem Stand der Technik sollte es aber nicht möglich sein einen Wärmeaustauscher aus Material mit Si-Gehalten zwischen 14 und 18 % Si, für das Beheizen der Säure zu verwenden, da dieses aufgrund der Empfindlichkeit gegenüber thermischem und mechanischem Schock und der schlechten Bearbeitbarkeit nicht als Heizer für Schwefelsäure bei hohen Temperaturen einsetzbar sein sollte.

Der Erfindung lag nun die Aufgabe zu Grunde, eine kostengünstige Apparatur zur Reinigung von Abfallschwefelsäure herzustellen, die es ermöglicht, unterschiedliche Abfallsäuren bei hohen Temperaturen mit jeweils unterschiedlichen Oxidationsmitteln zu behandeln.

Die erfindungsgemäße Apparatur besteht aus einem Reaktor, der so dimensioniert ist, dass die Verweilzeit für eine Zerstörung der organischen Verunreinigungen ausreicht, einer Umwälzpumpe, einem speziellen Wärmeaustauscher zum Einbringen der benötigten Energie in die Säure, der mit Hochtemperaturwärmeträgeröl beheizt wird sowie den verbindenden Rohrleitungen.

Für die Auswahl geeigneter, korrosionsbeständiger Materialien wurden zunächst die für ihre Beständigkeit gegen heiße Schwefelsäure bekannten Materialien wie emaillierter Stahl, mit Polytetrafluorethylen oder Perfluoralkoxy-Copolymer ausgekleideter Stahl, spezielle keramische Werkstoffe, siliziumhaltiger Stahlguss und siliziumhaltige Edelstahllegierungen auf Ihre Einsetzbarkeit hin untersucht.

Erwartungsgemäß haben sich für den Reaktor und die Rohrleitungen emaillierter Stahl und mit Polytetrafluorethylen ausgekleideter Stahl als gut einsetzbar erwiesen. Ein Problem trat bei der Auswahl der Materialien für den Wärmeaustauscher sowie des einzusetzenden Heizmediums auf, da man bei den meisten Materialien hier an die Grenzen in Bezug auf mechanische und speziell Temperaturwechselbeständigkeit kam. Bei Dampf als Heizmedium stößt man aufgrund der gewünschten Temperaturen in der Säure von > 190 °C bis 260 °C an das Problem, dass man in Druckbereichen > 20 bis 40 bar arbeiten muss, um eine vernünftige Temperaturdifferenz zwischen Heizmedium und Säure zu erreichen. Zusätzlich ist ein langsames, gleichmäßiges Aufheizen mit Dampf unter Vermeidung von lokalen Temperaturunterschieden schwierig. Bei Abschaltung entsteht auf der Dampfseite durch die Kondensation des Restdampfes ein Unterdruck, der zusätzliche erhöhte Anforderungen an die Abdichtung zwischen Säureseite und Heizmedium stellt. Daher wurde das Heizmedium Dampf für die erfindungsgemäße Apparatur verworfen und es wurde Hochtemperaturwärmeträgeröl als Heizmedium gewählt. Diese bietet den Vorteil, dass mit konstantem, moderatem Druck von ca. 6 bis 10 bar der Wärmetauscher betrieben werden kann. Auch ist ein gleichmäßiges Aufwärmen des Wärmeaustauschers möglich, da die Wärmetauscherflächen gleichmäßig mit Öl bedeckt sind und die Temperatur des Öls gleichmäßig und langsam beim Aufheizen ansteigt. Als Wärmeträger können alle unter den benötigten Temperaturbedingungen von 200 bis 350 °C beständigen natürlichen und synthetisch hergestellten Wärmeträgeröle eingesetzt werden. Auch andere Wärmeträgerflüssigkeiten mit ähnlichen Eigenschaften sind denkbar.

Trotz dieser vorteilhaften Bedingungen zeigten emaillierte Wärmeaustauscher immer noch den Mangel, dass es bei häufigem An- und Abfahren der Apparatur zu Rissen in der Emaillierung kam, die zu Leckagen führten. Daher wurde emaillierter Stahl als Material für den Heizer verworfen. Bei emaillierten Rohrleitungen und Apparaten trat dies nicht auf, da hier zum einen die Emailschicht wesentlich dicker ist, verglichen zu der bei einem emaillierten Heizer, zum anderen auch die Temperaturwechsel nicht so extrem sind. Tantal scheitert als Material für den Heizer, da für die Schwefelsäurekonzentrationen bis 96 Gew.-% H₂SO₄ ab ca. 210 °C auf der Säureseite Korrosion einsetzt, bei > 96 Gew.-% H₂SO₄ schon ab ca. 190 °C. Ein gegenüber Schwefelsäure sehr korrosionsbeständiges Material ist spezieller, hoch siliziumhaltiger Stahlguss. Dieser wird bereits für nicht stark thermisch und mechanisch belastete Bauteile, wie beispielsweise Kolonneneinbauten, bei der Konzentrierung von Schwefelsäure seit Jahrzehnten eingesetzt. Dieser hoch siliziumhaltige Stahlguss mit 14 - 18 % Si zeigte in der Vergangenheit ähnlich geringe mechanische Beständigkeit wie Glas, d. h. bei schnellem Temperaturwechsel traten lokale Spannungen auf und dies führte zu Spannungsbrüchen. Bei thermischer Ausdehnung kam es ebenfalls zu Spannungsbrüchen. Auch die Herstellung von gleichmäßigen, porenfreien, gasdichten Formteilen aus siliziumhaltigem Stahlguss ist mit erheblichen Schwierigkeiten verbunden, da das Material beim Abkühlen schrumpft. Daher wurde siliziumhaltiger Stahlguss mit 14 - 18 % Si bisher nicht als Material für einen Wärmeüberträger zum Beheizen der Schwefelsäure eingesetzt und auch bisher nicht dafür in Betracht gezogen. Aufgrund spezieller Gießtechnik und entsprechender Nachbearbeitung ist mittlerweile die Fertigung von entsprechenden Formteilen, speziell von Rohren aus siliziumhaltigem Stahlguss, in einer konstanten Qualität möglich. Hierbei wird die Gussform für das Rohr aufgestellt, so dass das Rohr vertikal gegossen wird. Das Einbringen der Schmelze in die Gussform erfolgt von unten, so dass sich die Schmelze gleichmäßig in der Form verteilt und keine Gasblasen eingeschlossen werden. Nach dem Giessen wird das Rohr in der Form über 12 bis 36 Stunden, in der Regel ca. 24 Stunden, gleichmäßig abgekühlt. Durch diese Vorgehensweise wird ein Rohr mit sehr gleichmäßiger Molekularstruktur erzielt.

Mit einem so speziell angefertigten Rohr wurden nun Versuche durchgeführt, in wie weit es möglich ist, einen Heizer für Schwefelsäure mit diesem Material auszuführen. Das Rohr wurde von außen in einem Ölbad mit Hochtemperaturwärmeträgeröl beheizt. Durch das Rohr wurde Schwefelsäure unterschiedlicher Konzentration im Bereich 60 Gew.-% H₂SO₄ bis 98 Gew.-% H₂SO₄ gepumpt. Es wurde zum einen die Wärmeausdehnung des Rohres gemessen, zum anderen wurde untersucht, in wie weit durch die Strömungsgeschwindigkeit der Säure mit Erosion oder verstärkter Korrosion zu rechnen ist. Auch die Temperaturwechselbeständigkeit wurde durch schnelles Aufheizen und Abkühlen des Ölbades untersucht.

Überraschenderweise wurde festgestellt, dass bei dem wie oben beschrieben gefertigten Rohr der siliziumhaltige Stahlguss wesentlich höherer Stabilität gegenüber dem Temperaturwechsel zeigte, als dies aus den bisherigen Erfahrungen mit siliziumhaltigem Stahlguss ähnlicher Zusammensetzung zu erwarten war. Auch die thermische Ausdehnung des Materials war in einem Bereich, der durch entsprechende Konstruktion und Kräftekompensation so abgefangen werden kann, dass keine mechanischen Spannungen auf das Rohr wirken, die zu Spannungsbrüchen führen. Zusätzlich wurde festgestellt, dass auch mit relativ hohen Strömungsgeschwindigkeiten der Säure in dem Rohr zwischen 1 und 5 m/s überraschenderweise keine Erosion und keine erhöhte Korrosion des Materials aufgetreten sind. Daher wird für die erfindungsgemäße Apparatur als Material für den säurebenetzten Teil des Wärmeaustauschers siliziumhaltiger Stahlguss mit Si Gehalten zwischen 14 bis 18 % Si eingesetzt. Im Folgenden sind mögliche Zusammensetzungen angegeben:
Material 1

| | | |
|---|---|---|
| Si | 15 bis 17 | Gew.-% |
| C | 0,4 bis 0,7 | Gew.-% |
| Mn | 0,3 bis 0,5 | Gew.-% |
| P | 0,05 | Gew.-% |
| S | 0,009 bis 0,05 | Gew.-% |
| Mo | - | Gew.-% |
| Cr | - | Gew.-% |
| Fe | Rest | Gew.-% |

Material 2

| | | |
|---|---|---|
| Si | 14,5 bis 15,5 | Gew.-% |
| C | 0,4 bis 0,7 | Gew.-% |
| Mn | 0,5 | Gew.-% |
| P | 0,05 | Gew.-% |
| S | 0,01 | Gew.-% |
| Mo | 3,0 | Gew.-% |
| Cr | - | Gew.-% |
| Fe | Rest | Gew.-% |

Material 3

| | | |
|---|---|---|
| Si | 14,5 bis 15 | Gew.-% |
| C | 0,4 bis 0,7 | Gew.-% |
| Mn | 0,5 | Gew.-% |
| P | 0,05 | Gew.-% |
| S | 0,01 | Gew.-% |
| Mo | - | Gew.-% |
| Cr | 5 | Gew.-% |
| Fe | Rest | Gew.-% |

Alle drei Materialien haben sich sowohl in Laborversuchen als auch im industriellen Einsatz als geeignet erwiesen und werden erfindungsgemäß eingesetzt. Abhängig von den Verunreinigungen in der jeweiligen Abfallsäure zeigen die einzelnen Materialien bestimmte Vorteile, so dass die Auswahl entsprechend den vorliegenden Betriebserfahrungen oder anhand von Laborversuchen erfolgt. Für den industriellen Einsatz wird das Rohr aus siliziumhaltigem Stahlguss in ein Rohr aus Stahl, beispielsweise RSt 37.2, montiert, durch das dann das Hochtemperaturwärmeträgeröl geleitet wird. Die Abdichtung zwischen Innenrohr aus siliziumhaltigem Stahlguss und Außenrohr aus Stahl erfolgt über entsprechende Dichtungen, die gegen das Hochtemperaturwärmeträgeröl und bei den ölseitigen Betriebstemperaturen bis 350 °C beständig sind.

Aufgrund der Viskosität der Schwefelsäure, speziell in höheren Konzentrationsbereichen zwischen 75 Gew.-% und 98 Gew.-%, wird in der erfindungsgemäßen Apparatur die Schwefelsäure durch den Wärmeaustauscher gepumpt. Als Material für die Pumpe kann ebenfalls der siliziumhaltige Stahlguss eingesetzt werden. Je nach gewünschter Behandlungstemperatur können auch andere korrosionsbeständige Materialien wie beispielsweise Fluorpolymerkunststoffe als Pumpenmaterial zum Einsatz kommen.

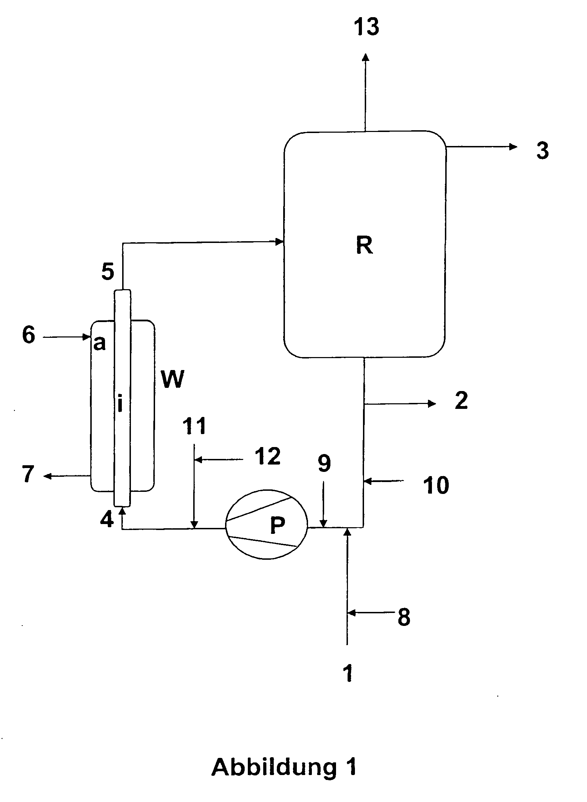

Die erfindungsgemäße Apparatur zur Reinigung von Abfallschwefelsäure ist in Abbildung 1 dargestellt. Sie besteht aus einem Reaktor R, der aus korrosionsbeständigem Material wie beispielsweise emailliertem Stahl oder mit Fluorpolymer ausgekleidetem Stahl gefertigt ist, aus einer Umwälzpumpe P, gefertigt aus siliziumhaltigem Stahlguss oder anderem korrosionsbeständigem Material wie beispielsweise Fluorpolymerkunststoffen, aus einem Wärmeaustauscher W, gefertigt aus einem Innenrohr i aus siliziumhaltigem Stahlguss und einem Außenrohr a, gefertigt aus Stahl und den verbindenden Rohrleitungen, die' ebenfalls aus korrosionsbeständigem Material wie beispielsweise emailliertem Stahl oder mit Fluorpolymer ausgekleidetem Stahl gefertigt sind.

Das Volumen des Reaktors R wird so gewählt, dass genügend Verweilzeit der Säure in der Apparatur erreicht wird, um die organischen Verunreinigungen zu zerstören. Die benötigte Verweilzeit wird aufgrund von Betriebserfahrungen mit ähnlichen Abfallsäuren oder anhand von Laborversuchen festgelegt. Die Umwälzleistung der Pumpe P wird entsprechend der Menge an zu behandelnder Abfallschwefelsäure festgelegt und ergibt sich ebenfalls aus Betriebserfahrungen mit ähnlichen Abfallsäuren oder anhand von Laborversuchen. Die Größe des Wärmeaustauschers W wird aus der benötigten Energie zur Behandlung der Säure berechnet. Je nach Aufstellung des Wärmeaustauschers W kann es vorteilhaft sein mehrere Wärmeaustauscher W in Reihe oder parallel zu betreiben. Der Wärmetauscher W kann sowohl horizontal als auch vertikal aufgestellt werden, da erfindungsgemäß sowohl die Säure, als auch das Hochtemperaturwärmeträgeröl gepumpt werden und dadurch ein Durchfuß der Medien unabhängig von der Aufstellung erreicht wird. Verfahrenstechnisch ist es sinnvoll, die Säure im Gegenstrom zu dem Hochtemperaturwärmeträgeröl zu führen, d.h. die Säure tritt an Position 4 in den Wärmeaustauscher W ein und verlässt ihn an Position 5, während das Hochtemperaturwärmeträgeröl an Position 6 in den Wärmetauscher eintritt und an Position 7 den Wärmeaustauscher W verlässt. Das Hochtemperaturwärmeträgeröl fließt dabei nur im Außenmantel a und benetzt gleichmäßig die äußere Oberfläche des Innenrohres i, während die Säure auf der Innenseite des Innenrohres i vorbeiströmt, die Energie aus dem Hochtemperaturwärmeträgeröl aufnimmt und sich dabei erhitzt. Die erhitzte Schwefelsäure fließt dann in den Reaktor R. Prinzipiell ist es auch möglich, die Säure im Gleichstrom mit dem Hochtemperaturwärmeträgeröl zu erhitzen; aus verfahrenstechnischer Sicht ist die Gegenstromfahrweise aber sinnvoller, da hier höhere Endtemperaturen der Säure erreicht werden können. Die gereinigte Säure zirkuliert zurück zur Umwälzpumpe P. Die Ausschleusung der gereinigten Säure kann wahlweise an Position 3 oder Position 2 aus dem Reaktor bzw. der Ablaufleitung aus dem Reaktor erfolgen. Die bei der Zerstörung der organischen Verunreinigungen entstehenden Gase werden an Position 13 aus dem Reaktor abgeleitet. Die zu behandelnde Abfallschwefelsäure wird vorzugsweise an Position 1 in die umlaufende, heiße, gereinigte Schwefelsäure zugegeben. Alternativ kann aber auch eine Zugabe an Positionen 11, druckseitig der Umwälzpumpe P, erfolgen. Eine Dosierung von Oxidationsmittel kann alternativ an den Positionen 8, 9, 10 und 12 erfolgen. Ob die Dosierung eines Oxidationsmittels für die Reinigung notwendig ist, an welcher Stelle das Oxidationsmittel dosiert , welches Oxidationsmittel eingesetzt wird und welche Mengen an Oxidationsmittel benötigt werden, ist abhängig von der Art der Abfallsäure und wird anhand von Betriebserfahrungen mit ähnlichen Abfallsäuren oder anhand von Laborversuchen festgelegt. Bei der erfindungsgemäßen Apparatur wird dann die entsprechende Eindosierstelle bzw. werden, falls notwendig, auch mehrere Eindosierstellen vorgesehen. Sollen verschiedene Abfallschwefelsäuren mit der Apparatur behandelt werden, können die entsprechenden Dosierstellen bei der erfindungsgemäßen Apparatur vorgesehen werden. Diese werden dann aber nur bei Bedarf abhängig von der Säure genutzt.

Die erfindungsgemäße Apparatur kann abhängig von der Konzentration der zu reinigenden Abfallsäure und der für die Reinigung benötigten Temperatur bei einem Betriebsdruck zwischen 10 mbar und 10 bar betrieben werden. Als besonders wirkungsvoll hat sich für viele Abfallsäuren ein Betrieb bei annähernd Siedetemperatur oder sogar leichter Überhitzung der Säure in Bezug auf die Siedetemperatur bei dem jeweiligen Betriebsdruck gezeigt. Bei Schwefelsäuren unterschiedlicher Konzentration im Bereich 60 Gew.-% H₂SO₄ bis 98 Gew.-% H₂SO₄ und Säuretemperaturen > 190 °C bis 260 °C wurden optimale Reinigungsergebnisse erzielt.

Die erfindungsgemäße Apparatur kann wahlweise ansatzweise oder alternativ im kontinuierlichen Betrieb eingesetzt werden.

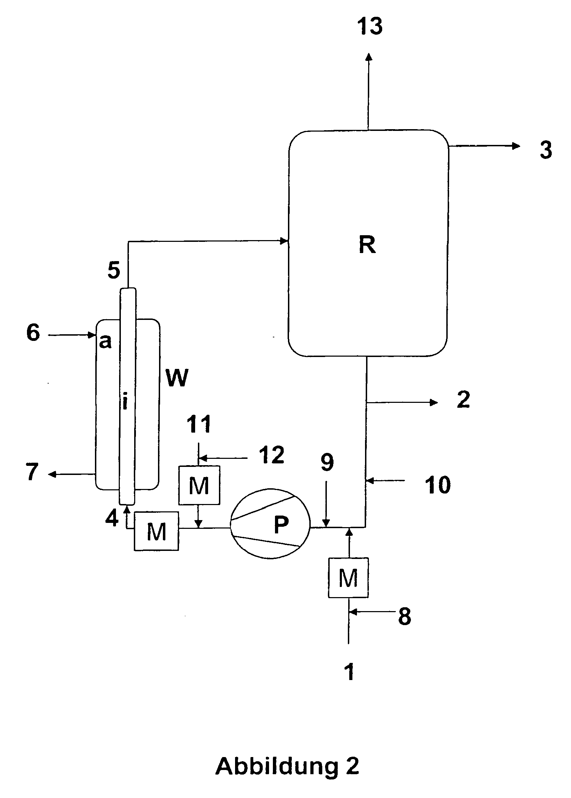

Bei ansatzweisem Betrieb wird die Abfallsäure in die erfindungsgemäße Apparatur eingebracht. Hierbei kann schon die Zugabe von Oxidationsmittel erfolgen. Anschließend wird die Säure umgewälzt und durch Beheizung über den Wärmeaustauscher W auf Betriebstemperatur erhitzt. An den Positionen 9, 10 und 12 kann schon während des Aufheizens und auch während der gesamten Betriebsdauer Oxidationsmittel in die Säure zugegeben werden. Direkt nach den Zugabestellen können zur besseren Vermischung der Säure mit dem Oxidationsmittel zusätzlich Mischer, bevorzugt statische Mischer, in die Leitung eingebaut werden. Mögliche Mischerpositionen sind als M in Abbildung 2 dargestellt. Wenn die Reinigung der Abfallsäure abgeschlossen ist, wird die gereinigte Säure ausgeschleust und entsprechend neu gefüllt.

Die Ausschleusung kann wahlweise heiß oder nach Abkühlung der gereinigten Säure erfolgen. Anschließend wird der nächste Ansatz in die erfindungsgemäße Apparatur eingebracht.

Der ansatzweise Betrieb ist dann vorteilhaft, wenn längere Verweilzeit und höhere Mengen an Oxidationsmittel für die Reinigung der Abfallsäure benötigt werden. Wenn bereits nach einem Umlauf der gewünschte Reinigungseffekt erzielt werden kann, ist der kontinuierliche Betrieb sinnvoller.

Beim kontinuierlichen Betrieb erfolgt die Zugabe der Abfallsäure kontinuierlich in die umlaufende, heiße, gereinigte Säure. Die Zugabe der Abfallsäure in die umlaufende, heiße gereinigte Schwefelsäure hat den Vorteil, dass einerseits die Abfallsäure schlagartig auf annähernde Betriebstemperatur gebracht wird, wodurch viele organische Verunreinigungen bereits zerstört werden, andererseits wird in der Mischung die Konzentration an organischen Verunreinigungen entsprechend dem Verhältnis zulaufende Abfallsäure zu umlaufender gereinigter Säure entsprechend verringert, wodurch speziell bei stark exothermen Zersetzungsreaktionen einzelner organischer Verbindungen eine sicherer Energieabfuhr in Form der Erhitzung der Schwefelsäure sichergestellt ist. Dadurch kann die erfindungsgemäße Apparatur auch für Abfallsäuren aus der Explosivstoffherstellung eingesetzt werden, die damit sicher gereinigt werden können. Das Verhältnis zulaufende Abfallsäure zu umlaufender gereinigter Säure liegt bei der erfindungsgemäßen Apparatur bei kontinuierlichem Betrieb normalerweise zwischen 1:1 und 1:400 bezogen auf Abfallsäure:umlaufende Säure. Für spezielle Reinigungsaufgaben kann diese aber entsprechend angepasst werden.

Auch beim kontinuierlichen Betrieb kann an den Positionen 8, 9, 10 und 12 kontinuierlich Oxidationsmittel in die Säure zugegeben werden. Auch hier kann die Mischung durch zusätzlichen Einbau von Mischern, wie exemplarisch als M in Abbildung 2 dargestellt, in die Leitung, direkt nach der Eindosierstelle des Oxidationsmittels, verbessert werden. Es kann beispielsweise in die zulaufende evtl. noch kalte Abfallschwefelsäure (Zulauf über Position 1 und/oder 11) Oxidationsmittel (über Position 8 bzw. 12) zugegeben werden, so dass sich dieses vor Eintritt in die erfindungsgemäße Apparatur mit der Abfallsäure in kaltem Zustand bereits optimal vermischt, bevor die Mischung dann in die heiße umlaufende, gereinigte Schwefelsäure eingeleitet wird. Dies kann den Vorteil bringen, dass die organischen Verunreinigungen bereits in der kalten Abfallsäure mit dem Oxidationsmittel reagieren und durch die schlagartige Erhitzung nach der Eindosierung zügig weiterreagieren.

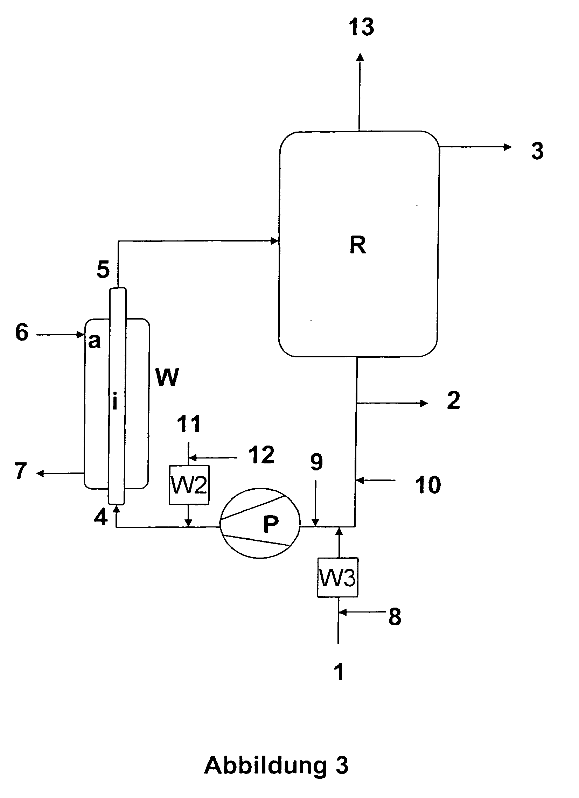

Versuche haben gezeigt, dass mit einer entsprechenden Betriebsweise der erfindungsgemäßen Apparatur bei einigen Säuren eine Verringerung des Oxidationsmittelbedarfes für die Reinigung erzielt werden kann, wenn die Abfallsäuren bereits in kaltem Zustand mit dem Oxidationsmittel vermischt werden. Auch eine Vorwärmung der Abfallsäure vor oder nach Zugabe von Oxidationsmitteln vor dem Einbringen in die erfindungsgemäße Apparatur kann vorteilhaft sein, da dadurch die Energie, die über den Wärmeaustauscher W in das System eingebracht werden muss, verringert wird und zusätzlich die umlaufende Säure nach Zugabe der Abfallsäure sich nicht so stark abkühlt. Mögliche Positionen für entsprechende Vorwärmer sind als W2 und W3 in Abbildung 3 dargestellt. Welche Betriebsweise die meisten Vorteile bringt, muss über Versuche ermittelt werden oder ist aus Betriebserfahrüngen bekannt.

Alternativ besteht natürlich auch die Möglichkeit, die Abfallsäure an verschiedenen Positionen (1, 9, 10, 12) mit und ohne vorherige Zudosierung von Oxidationsmitteln in die erfindungsgemäße Apparatur einzubringen. Auch die Vorbehandlung eines Teils oder der gesamten Abfallsäure vor dem Einbringen in die erfindungsgemäße Apparatur kann vorteilhaft sein. Diese Vorbehandlung kann beispielsweise aus einer Strippung, einer Konzentrierung oder einer Extraktion bestehen, wodurch sich der Anteil an organischen Verunreinigungen für einige Anwendungen bereits reduzieren lässt und sich dadurch die Reinigungsaufgabe für die erfindungsgemäße Apparatur vereinfacht.

Über den Wärmeaustauscher W kann in die erfindungsgemäße Apparatur auch zusätzliche Energie in die Säure eingebracht werden, die dann in Form von Wasserdampf zusammen mit den bei der Zersetzung der organischen Verbindungen entstehenden Abgasen und zusammen mit wasserdampfflüchtigen organischen Verbindungen und

Zersetzungsprodukten an Position 13 aus der erfindungsgemäßen Apparatur abgeleitet wird. Die umlaufende Säure wird dadurch im Reinigungsschritt von wasserdampfflüchtigen Verbindungen befreit und zusätzlich konzentriert.

Die erfindungsgemäße Apparatur kann sowohl nur zur Reinigung von Abfallschwefelsäure als auch zur Reinigung und gleichzeitigen Konzentrierung der Abfallsäure eingesetzt werden.

Prinzipiell lässt sich die erfindungsgemäße Apparatur auch nur für die Konzentrierung von Schwefelsäure einsetzen, ohne Reinigungsaufgabe, da sie bei den entsprechenden Betriebsbedingungen korrosionsbeständig ist.

Die gereinigte Abfallsäure kann vorzugsweise in den Prozess, bei dem sie anfällt, zurückgeführt oder alternativ vermarktet werden. Auch eine anschließende Konzentrierung der gereinigten Säure ist möglich.

Als Oxidationsmittel können für die Reinigung die aus der Literatur bekannten Oxidationsmittel wie Salpetersäure, Wasserstoffperoxyd, Ozon, etc. eingesetzt werden. Wenn die Konzentration der Schwefelsäure durch die Zugabe des Oxidationsmittels nicht unnötig verringert werden soll, müssen entsprechend hoch konzentrierte Lösungen der Oxidationsmittel eingesetzt werden.

Die Funktionsweise der erfindungsgemäßen Apparatur soll nun im Folgenden an verschiedenen Beispielen verdeutlicht werden.

### Beispiel 1:

Eine Abfallsäure, verunreinigt mit 2-Buthanol (SBA) und

Methylethylketon (MEK) und einer Schwefelsäurekonzentration von ca. 60 Gew.-% H₂SO₄, wurde kontinuierlich mit der erfindungsgemäßen Apparatur behandelt. In der Apparatur wurde saubere Schwefelsäure mit 77 Gew.-% H₂SO₄ vorgelegt und auf Siedetemperatur von ca. 197 °C bei einem Betriebsdruck von ca. 1300 mbar erhitzt. Die Abfallschwefelsäure wurde an Position 1 zugeführt. In die ca. 20 °C kalte Abfallschwefelsäure wurde Salpetersäure über Position 8 zugegeben im Verhältnis von 0,01:1 Salpetersäure:Abfallsäure. Die Mischung wurde dann vor Eindosierung in die umlaufende Schwefelsäure über einen Wärmeaustauscher indirekt auf 130 °C erhitzt. Das Verhältnis umlaufende Schwefelsäure:Abfallsäure betrug 50:1. Die Energie, die über W in die erfindungsgemäße Apparatur eingebracht wurde, wurde über die Temperatur der umlaufenden Säure so geregelt, dass diese Temperatur bei 197 °C konstant gehalten . Die Abgase und der entstehende Wasserdampf wurden an Position 13 aus der Apparatur abgeleitet. Die gereinigte Säure verließ die Apparatur an Position 2 mit einer Schwefelsäurekonzentration von konstant 77 Gew.-% H₂SO₄. Der Gehalt an organischen Verunreinigungen in der Säure konnte von ca. 4000 mg O₂/kg CSB in der Abfallsäure auf ca. 2000 mg O₂/kg CSB in der Produktsäure reduziert werden. Die Säure konnte nach anschließender Konzentrierung wieder im Produktionsprozess eingesetzt werden.

### Beispiel 2:

Eine Abfallsäure verunreinigt mit Alkylsulfonsäuren und einer Schwefelsäurekonzentration von ca. 60 Gew.-% H₂SO₄ wurde kontinuierlich mit der erfindungsgemäßen Apparatur behandelt. In der Apparatur wurde saubere Schwefelsäure mit 80 Gew.-% H₂SO₄ vorgelegt und auf Siedetemperatur von ca. 210 °C bei einem Betriebsdruck von ca. 1000 mbar erhitzt. Die Abfallschwefelsäure wurde an Position 1 zugeführt. In die ca. 20 °C kalte Abfallschwefelsäure wurde Wasserstoffperoxyd über Position 8 zugegeben im Verhältnis von 0,03:1 Wasserstoffperoxyd:Abfallsäure. Das Verhältnis umlaufende, gereinigte Schwefelsäure:Abfallsäure betrug 100:1. Die Energie, die über W in die erfindungsgemäße Apparatur eingebracht wurde, wurde über die Temperatur der umlaufenden Säure so geregelt, dass diese Temperatur bei 207 °C konstant gehalten wurde. Die Abgase und der entstehende Wasserdampf wurden an Position 13 aus der Apparatur abgeleitet. Die gereinigte Säure verließ die Apparatur an Position 2 mit einer Schwefelsäurekonzentration von konstant 80 Gew.-% H₂SO₄. Diese Säure wurde dann kontinuierlich in eine zweite erfindungsgemäße Apparatur geleitet und mit dieser nochmals behandelt. In der zweiten Apparatur wurde saubere Schwefelsäure mit 85 Gew.-% H₂SO₄ vorgelegt und auf Siedetemperatur von ca. 230 °C bei einem Betriebsdruck von ca. 1000 mbar erhitzt. Die vorgereinigte Schwefelsäure aus der ersten Apparatur wurde an Position 1 zugeführt. In die ca. 207 °C heiße Abfallschwefelsäure wurde Wasserstoffperoxyd über Position 8 zugegeben im Verhältnis von 0,03:1 Wasserstoffperoxyd:Abfallsäure. Das Verhältnis umlaufende, gereinigte Schwefelsäure:Abfallsäure betrug 100:1. Die Energie, die über W in die erfindungsgemäße Apparatur eingebracht wurde, wurde über die Temperatur der umlaufenden Säure so geregelt, dass diese Temperatur bei 230 °C konstant gehalten wurde. Die Abgase und der entstehende Wasserdampf wurden an Position 13 aus der Apparatur abgeleitet. Die gereinigte Säure verließ die Apparatur an Position 2 mit einer Schwefelsäurekonzentration von konstant 85 Gew.-% H₂SO₄. Der Gehalt an organischen Verunreinigungen in der Säure konnte von ca. 9000 mg O₂/kg COD in der Abfallsäure auf <100 mg O₂/kg COD in der Produktsäure reduziert werden.

### Beispiel 3:

Eine Abfallsäure aus der Herstellung von DNT wurde zunächst durch Strippung und Konzentrierung vorbehandelt. Die resultierende Schwefelsäure hatte eine Konzentration von ca. 85 Gew.-% H₂SO₄ und wurde kontinuierlich mit der erfindungsgemäßen Apparatur behandelt. In der Apparatur wurde saubere Schwefelsäure mit 96 Gew.-% H₂SO₄ vorgelegt und auf Siedetemperatur von ca. 230 °C bei einem Betriebsdruck von ca. 90 mbar erhitzt. Über Position 9 wurde Salpetersäure in die umlaufende Schwefelsäure zugegeben. Die Energie, die über W in die erfindungsgemäße Apparatur eingebracht wurde, wurde über die Temperatur der umlaufenden Säure so geregelt, dass diese Temperatur bei 230 °C konstant gehalten wurde. Die Abgase und der entstehende Wasserdampf wurden an Position 13 aus der Apparatur abgeleitet. Die gereinigte Säure verließ die Apparatur an Position 2 mit einer Schwefelsäurekonzentration von konstant 96 Gew.-% H₂SO₄. Der Gehalt an organischen Verunreinigungen in der Produktsäure konnte konstant bei < 200 ppm TOC gehalten werden. Die Säure konnte wieder im Produktionsprozess eingesetzt werden.

## Patentansprüche

1. Apparatur zur Reinigung von Abfallschwefelsäure, bei der durch Behandlung bei hoher Temperatur und Zugabe von Oxidationsmittel organische Verunreinigungen in der Schwefelsäure zerstört werden, bestehend aus einem Reaktor, der so dimensioniert ist, dass die Verweilzeit für eine Zerstörung der organischen Verunreinigungen ausreicht, einer Umwälzpumpe, einem Wärmeaustauscher, sowie den verbindenden Rohrleitungen, **dadurch gekennzeichnet dass**
a) der Reaktor aus emailliertem Stahl oder mit Polytetrafluorethylen ausgekleidetem Stahl ausgeführt ist,
b) die Rohrleitungen aus emailliertem Stahl oder mit Polytetrafluorethylen ausgekleidetem Stahl ausgeführt sind,
c) Hochtemperaturwärmeträgeröl als Heizmedium eingesetzt wird,
d) als Material für den säurebenetzten Teil des Wärmeaustauschers siliziumhaltiger Stahlguss mit einem Si-Gehalt zwischen 14 und 18 % Si eingesetzt wird,
e) der Wärmeaustauscher aus einem Innenrohr aus siliziumhaltigem Stahlguss und einem Außenrohr aus Stahl besteht,
f) das Innenrohr aus siliziumhaltigem Stahlguss stehend gegossen wird in dem
i. die Gussform vertikal aufgestellt wird,
ii. die Schmelze von unten in die Gussform eingebracht wird,
iii. und nach dem Giessen das Rohr zwischen 12 bis 36 Stunden in der Form abgekühlt wird,
g) die Pumpe aus einem korrosionsbeständigen Material wie siliziumhaltigem Stahlguss oder einem Fluorpolymerkunststoff besteht,
h) die.Apparatur die Möglichkeit vorsieht, Oxidationsmittel in die Säure zuzudosieren,
wobei der für den Wärmeaustauscher eingesetzte siliziumhaltige Stahlguss eine der folgenden Zusammensetzung aufweist:
| | | |
|---|---|---|
| Si | 15 bis 17 | Gew.-% |
| C | 0,4 bis 0,7 | Gew.-% |
| Mn | 0,3 bis 0,5 | Gew.-% |
| P | 0,05 | Gew.-% |
| S | 0,009 bis 0,05 | Gew.-% |
| Mo | - | Gew.-% |
| Cr | - | Gew.-% |
| Fe | Rest | Gew.-% |
oder
| | | |
|---|---|---|
| Si | 14,5 bis 15,5 | Gew.-% |
| C | 0,4 bis 0,7 | Gew.-% |
| Mn | 0,5 | Gew.-% |
| P | 0,05 | Gew.-% |
| S | 0,01 | Gew.-% |
| Mo | 3,0 | Gew.-% |
| Cr | - | Gew.-% |
| Fe | Rest | Gew.-% |
oder
| | | |
|---|---|---|
| Si | 14,5 bis 15 | Gew.-% |
| C | 0,4 bis 0,7 | Gew.-% |
| Mn | 0,5 | Gew.-% |
| P | 0,05 | Gew.-% |
| S | 0,01 | Gew.-% |
| Mo | - | Gew.-% |
| Cr | 5 | Gew.-% |
| Fe | Rest | Ges.-% |

2. Apparatur nach Anspruch 1 **dadurch gekennzeichnet, dass** die Abdichtung beim Wärmeaustauscher zwischen Innenrohr aus siliziumhaltigem Stahlguss und Außenrohr aus Stahl über Dichtungen erfolgt, die gegen das Hochtemperaturwärmeträgeröl und bei den ölseitigen Betriebstemperaturen bis 350 °C beständig sind.

3. Apparatur nach Anspruch 1 **dadurch gekennzeichnet, dass** der Wärmeaustauscher vertikal aufgestellt wird.

4. Apparatur nach Anspruch 1 **dadurch gekennzeichnet, dass** der Wärmeaustauscher horizontal aufgestellt wird.

5. Apparatur nach Anspruch 1 **dadurch gekennzeichnet, dass** mehrere Wärmeaustauscher parallel geschaltet sind.

6. Apparatur nach Anspruch 1 **dadurch gekennzeichnet, dass** mehrere Wärmeaustauscher in Reihe geschaltet sind.

7. Apparatur nach Anspruch 1 **dadurch gekennzeichnet, dass** mehrere Wärmeaustauscher parallel und in Reihe geschaltet sind.

8. Apparatur nach Anspruch 1 **dadurch gekennzeichnet, dass** Strömungsgeschwindigkeiten der Säure in dem Innenrohr zwischen 1 und 5 m/s erreicht werden.

9. Apparatur nach Anspruch 1 **dadurch gekennzeichnet, dass** die Apparatur säureseitig bei einem Betriebsdruck zwischen 10 mbar und 10 bar betrieben wird.

10. Apparatur nach Anspruch 1 **dadurch gekennzeichnet, dass** das Wärmeträgeröl bei einem Druck von 6 bis 10 bar eingesetzt wird.

11. Apparatur nach Anspruch 1 **dadurch gekennzeichnet, dass** das Wärmeträgeröl gepumpt wird.

12. Apparatur nach Anspruch 1 **dadurch gekennzeichnet, dass** das Wärmeträgeröl im Wärmeaustauscher im Gegenstrom zur Säure geführt wird.

13. Apparatur nach Anspruch 1 **dadurch gekennzeichnet, dass** das Wärmeträgeröl im Wärmeaustauscher im Gleichstrom zur Säure geführt wird.

14. Apparatur nach Anspruch 1 **dadurch gekennzeichnet, dass** in die Apparatur Mischer zur Vermischung von Oxidationsmittel und Säure eingebaut sind.

15. Apparatur nach Anspruch 1 **dadurch gekennzeichnet, dass** sie Eindosierstellen (1, 9, 10, 12) aufweist.

16. Apparatur nach Anspruch 1 **dadurch gekennzeichnet, dass** entstehenden Abgase, wasserdampfflüchtige organische Verbindungen und Zersetzungsprodukte an Position 13 aus der Apparatur abgeleitet werden.

## Claims

1. Apparatus for purifying waste sulphuric acid, in which organic impurities in the sulphuric acid are eliminated by treating at a high temperature and introducing oxidising agent, consisting of a reactor, which is dimensioned in such a way that the retention time is sufficient for breaking down the organic impurities, a circulation pump, a heat exchanger, and the connecting pipelines, **characterised in that**
a) the reactor is formed from enamelled steel or steel coated with polytetrafluoroethylene,
b) the pipelines are formed from enamelled steel or steel coated with polytetrafluoroethylene,
c) high-temperature heat transfer oil is used as a heating medium,
d) silicon cast steel having a Si content of between 14 and 18 % Si is used as a material for the acid-wetted part of the heat exchanger,
e) the heat exchanger consists of a silicon cast steel inner pipe and a steel outer pipe,
f) the inner pipe consisting of silicon cast steel is cast **in that**
i. the casting mould is set up vertically,
ii. the melt is introduced into the casting mould from below,
iii. and after casting, the pipe is cooled in the mould for 12 to 36 hours,
g) the pump consists of a corrosion-resistant material such as silicon cast steel or a fluoropolymer plastics material,
h) the apparatus provides the possibility of introducing oxidising agent into the acid,
the silicon cast steel used for the heat exchanger having one of the possible compositions:
| | | |
|---|---|---|
| Si | 15 to 17 | % by weight |
| C | 0.4 to 0.7 | % by weight |
| Mn | 0.3 to 0.5 | % by weight |
| P | 0.05 | % by weight |
| S | 0.009 to 0.05 | % by weight |
| Mo | - | % by weight |
| Cr | - | % by weight |
| Fe | remainder | % by weight |
or
| | | |
|---|---|---|
| Si | 14.5 to 15.5 | % by weight |
| C | 0.4 to 0.7 | % by weight |
| Mn | 0.5 | % by weight |
| P | 0.05 | % by weight |
| S | 0.01 | % by weight |
| Mo | 3.0 | % by weight |
| Cr | - | % by weight |
| Fe | remainder | % by weight |
or
| | | |
|---|---|---|
| Si | 14.5 to 15 | % by weight |
| C | 0.4 to 0.7 | % by weight |
| Mn | 0.5 | % by weight |
| P | 0.05 | % by weight |
| S | 0.01 | % by weight |
| Mo | - | % by weight |
| Cr | 5 | % by weight |
| Fe | remainder | % by weight |

2. Apparatus according to claim 1, **characterised in that** the sealing in the heat exchanger between the silicon cast steel inner pipe and the steel outer pipe is provided by seals which are resistant to the high-temperature heat transfer oil and at the operating temperatures of up to 350 °C of the oil.

3. Apparatus according to claim 1, **characterised in that** the heat exchanger is set up vertically.

4. Apparatus according to claim 1, **characterised in that** the heat exchanger is set up horizontally.

5. Apparatus according to claim 1, **characterised in that** a plurality of heat exchangers are connected in parallel.

6. Apparatus according to claim 1, **characterised in that** a plurality of heat exchangers are connected in series.

7. Apparatus according to claim 1, **characterised in that** a plurality of heat exchangers are connected in parallel and in series.

8. Apparatus according to claim 1, **characterised in that** flow velocities of the acid in the inner pipe of between 1 and 5 m/s are achieved.

9. Apparatus according to claim 1, **characterised in that** the apparatus is operated at an operating pressure of between 10 mbar and 10 bar on the acid side.

10. Apparatus according to claim 1, **characterised in that** the heat transfer oil is used at a pressure of 6 to 10 bar.

11. Apparatus according to claim 1, **characterised in that** the heat transfer oil is pumped.

12. Apparatus according to claim 1, **characterised in that** the heat transfer oil is guided in the heat exchanger in the opposite flow direction from the acid.

13. Apparatus according to claim 1, **characterised in that** the heat transfer oil is guided in the heat exchanger in the same flow direction as the acid.

14. Apparatus according to claim 1, **characterised in that** mixers for mixing oxidising agent and acid are incorporated into the apparatus.

15. Apparatus according to claim 1, **characterised in that** it comprises introduction points (1, 9, 10, 12).

16. Apparatus according to claim 1, **characterised in that** developed exhaust gases, organic compounds which are volatile in steam, and decomposition products are removed from the apparatus at position 13.

## Revendications

1. Appareil destiné au nettoyage d'acide sulfurique de déchets, dans lequel les impuretés organiques dans l'acide sulfurique sont détruites par traitement à haute température et par addition d'un agent d'oxydation, ledit appareil étant constitué d'un réacteur dimensionné de manière à ce que le temps de résidence pour une destruction des impuretés organiques soit suffisant, d'une pompe de recirculation, d'un échangeur de chaleur, et de conduites tubulaires de raccordement, **caractérisé en ce que** :
a) le réacteur est construit en acier émaillé ou en acier revêtu de polytétrafluoroéthylène,
b) les conduites tubulaires sont construites en acier émaillé ou en acier revêtu de polytétrafluoroéthylène,
c) de l'huile caloporteuse à haute température est utilisée comme média de chauffe,
d) de la fonte d'acier contenant du silicium ayant une teneur en Si entre 14 et 18 % est utilisée comme matériau pour la partie de l'échangeur de chaleur plongée dans l'acide,
e) l'échangeur de chaleur se compose d'un tube interne en fonte d'acier contenant du silicium et d'un tube externe en acier,
f) le tube interne en fonte d'acier contenant du silicium est coulé à la verticale en
i. installant le moule à la verticale,
ii. introduisant la matière fondue par le bas dans le moule,
iii. et faisant refroidir le tube dans le moule pendant 12 à 36 heures après la coulée,
g) la pompe se compose d'un matériau résistant à la corrosion comme la fonte d'acier contenant du silicium ou un polymère fluoroplastique,
h) l'appareil donne la possibilité d'ajouter des agents d'oxydation dans l'acide,
et dans lequel la fonte d'acier contenant du silicium, utilisée pour l'échangeur de chaleur, présente une des compositions suivantes :
| | | |
|---|---|---|
| Si | 15 à 17 | % en poids |
| C | 0,4 à 0,7 | % en poids |
| Mn | 0,3 à 0,5 | % en poids |
| P | 0,05 | % en poids |
| S | 0,009 à 0,05 | % en poids |
| Mo | - | % en poids |
| Cr | - | % en poids |
| Fe | reste | % en poids |
ou
| | | |
|---|---|---|
| Si | 14,5 à 15,5 | % en poids |
| C | 0,4 à 0,7 | % en poids |
| Mn | 0,5 | % en poids |
| P | 0,05 | % en poids |
| S | 0,01 | % en poids |
| Mo | 3,0 | % en poids |
| Cr | - | % en poids |
| Fe | reste | % en poids |
ou
| | | |
|---|---|---|
| Si | 14,5 à 15 | % en poids |
| C | 0,4 à 0,7 | % en poids |
| Mn | 0,5 | % en poids |
| P | 0,05 | % en poids |
| S | 0,01 | % en poids |
| Mo | - | % en poids |
| Cr | 5 | % en poids |
| Fe | reste | % en poids |

2. Appareil selon la revendication 1, **caractérisé en ce que** l'étanchéité dans l'échangeur de chaleur entre le tube interne en fonte d'acier contenant du silicium et le tube externe en acier est assurée par le biais de joints qui sont résistants à l'huile caloporteuse à haute température et à des températures de service côté huile allant jusqu'à 350°C.

3. Appareil selon la revendication 1, **caractérisé en ce que** l'échangeur de chaleur est disposé à la verticale.

4. Appareil selon la revendication 1, **caractérisé en ce que** l'échangeur de chaleur est disposé à l'horizontale.

5. Appareil selon la revendication 1, **caractérisé en ce que** plusieurs échangeurs de chaleur sont montés en parallèle.

6. Appareil selon la revendication 1, **caractérisé en ce que** plusieurs échangeurs de chaleur sont montés en série.

7. Appareil selon la revendication 1, **caractérisé en ce que** plusieurs échangeurs de chaleur sont montés en parallèle et en série.

8. Appareil selon la revendication 1, **caractérisé en ce que** des vitesses d'écoulement de l'acide situées entre 1 et 5 m/s sont atteintes dans le tube interne.

9. Appareil selon la revendication 1, **caractérisé en ce que** l'appareil fonctionne côté acide à une pression de service entre 10 mbar et 10 bar.

10. Appareil selon la revendication 1, **caractérisé en ce que** de l'huile caloporteuse à une pression de 6 à 10 bar est utilisée.

11. Appareil selon la revendication 1, **caractérisé en ce que** l'huile caloporteuse est pompée.

12. Appareil selon la revendication 1, **caractérisé en ce que** l'huile caloporteuse dans l'échangeur de chaleur est amenée à contre-courant de l'acide.

13. Appareil selon la revendication 1, **caractérisé en ce que** l'huile caloporteuse dans l'échangeur de chaleur est amenée dans le même sens que l'acide.

14. Appareil selon la revendication 1, **caractérisé en ce que** des mélangeurs destinés au mélange de l'agent d'oxydation et de l'acide sont intégrés à l'appareil.

15. Appareil selon la revendication 1, **caractérisé en ce qu'**il comprend des sites d'addition (1, 9, 10, 12).

16. Appareil selon la revendication 1, **caractérisé en ce que** les gaz d'échappement dégagés, les composés organiques volatils et les produits de décomposition sont évacués de l'appareil en position 13.
